# EUROPÄISCHE PATENTSCHRIFT

(11) **EP 1 249 380 B1**
(45) Veröffentlichungstag und Bekanntmachung des Hinweises auf die Patenterteilung: **28.04.2004**
(21) Anmeldenummer: 02005697.4
(22) Anmeldetag: 13.03.2002
(51) Int. Cl.: B62D 15/00

(54) **Ein-/Ausparkvorrichtung für Personenkraftfahrzeuge**
Device for parking vehicles
Dispositif pour faire entrer et sortir un véhicule d'une place de stationnement

(30) Priorität: 09.04.2001 DE 10117651
(43) Veröffentlichungstag der Anmeldung: 16.10.2002
(73) Patentinhaber: DaimlerChrysler AG, 70567 Stuttgart (DE)
(72) Erfinder: Mäckle, Günther, 70619 Stuttgart (DE); Schirle, Thomas, 74613 Öhringen (DE)

(56) Entgegenhaltungen:
- EP-A- 0 479 735
- DE-A- 10 030 449
- DE-C- 908 576
- FR-A- 2 764 091

## Beschreibung

Die Erfindung betrifft eine Ein-/Ausparkvorrichtung, insbesondere für kompakte Stadtfahrzeuge, gemäß dem Oberbegriff des Patentanspruchs 1.

Eine derartige Ein-/Ausparkvorrichtung ist beispielsweise aus der EP 0 479 735 A1 bekannt.

Kompakte Stadtfahrzeuge bieten die Möglichkeit, auch Parkflächen zu nutzen, die bisher für Personenkraftfahrzeuge nicht zugänglich waren. Ein spezieller Vorteil dieser kompakten Stadtfahrzeuge mit ihrer geringen Fahrzeuglänge ist die Möglichkeit, das Fahrzeug am Fahrbahnrand quer zum Fahrbahnverlauf parken zu können. Die erforderliche Breite eines derartigen Querparkplatzes ergibt sich aus der Fahrzeugbreite plus der für den Personenausstieg nötigen Öffnungsbreite der seitlichen Türen.

Zum Einparken von Kraftfahrzeugen parallel zur Fahrbahnrichtung sind verschiedene automatische Parkhilfen bekannt geworden, die den Fahrzeugführer beim gelenkten Einparken unterstützen. Die bekannten Systeme, messen z.B. mittels Sensoren selbsttätig einen zur Verfügung stehenden Parkplatz vor und während des Einparkens aus und geben aus den so gewonnenen Daten rechnerunterstützt Manövrierhinweise für den Fahrzeugführer aus (DE-A1-3844340).

Die aus der EP 0 479 735 A1 bekannte gattungsgemäße Ein-/Ausparkvorrichtung, weist ein drahtgebundenes Steuer-Panel auf, über das das einzuparkende Fahrzeug von einem ausgestiegenen Fahrzeugführer in die Parklücke manövriert wird.

Der Erfindung liegt die Aufgabe zugrunde, eine Ein-Ausparkvorrichtung zum Parken von Personenkraftfahrzeugen in vorwärts oder rückwärts gerichteter Geradeausfahrt zu schaffen, die den Fahrzeugführer auch das Ausnutzen von Parkflächen ermöglicht, deren geringe Breite einen seitlichen Personenausstieg aus dem eingeparkten Fahrzeug nicht zuläßt.

Diese Aufgabe wird erfindungsgemäß durch die im Patentanspruch 1 angegebenen Merkmale gelöst. Weiterbildungen der Erfindung sind in den Unteransprüchen angegeben.

Die Erfindung beruht darauf, dass das Fahrzeug vor einer vorhandenen Parklücke nach Sicht so abgestellt wird, dass es nach dem Ausstieg aller Fahrzeuginsassen von außen mittels einer manuell betätigten Fernsteuerung in rückwärts oder vorwärts gerichteter Geradeausfahrt in die Parklücke hineinmanövrierbar ist. Auch das erfindungsgemäße Manövrieren mittels der Fernsteuerung erfolgt mit einer kontrollierten Einparkgeschwindigkeit nach Sicht. Die Lenkung ist dabei für die Geradeausfahrt blockiert.

Die erfindungsgemäße Lösung hat den Vorteil, dass keine aufwendige Sensorik zur Umgebungsauswertung und keine Mittel zur Unterstützung von Lenkungseingriffen benötigt werden. Bei einer entsprechend geeigneten Grundausrüstung eines Fahrzeuges mit einer rechnergestützten Motorsteuerung und einer steuerbaren Feststellbremse läßt sich die erfindungsgemäße Einparkvorrichtung einfach als Zusatzmodul in das Fahrzeug integrieren. Die Fernsteuerung kann vorteilhaft in eine vorhandene, drahtlose Schließanlage integriert werden.

Mit dem erfindungsgemäß erreichten Einsparungseffekt bezüglich der erforderlichen Parkplatzbreite sind auch wirtschaftliche Vorteile für ein in vorwärts oder rückwärts gerichteter Geradeausfahrt erfolgendes Abstellen von Personenkraftfahrzeugen in Parkhäusern erzielbar.

Da außerhalb eines Fahrzeuges eine bessere Sichtkontrolle gegeben ist, bietet die erfindungsgemäße Lösung auch Vorteile beim genauen Anfahren an Objekte, z.B. an eine Hebebühne oder eine Anhängerkupplung.

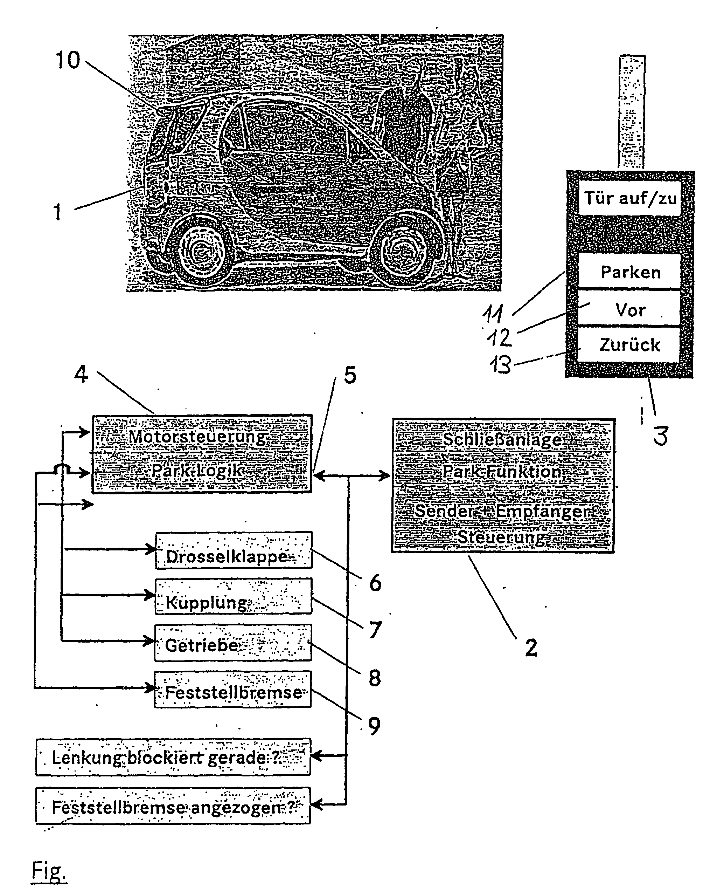

Anhand der Zeichnung wird nachstehend ein Ausführungsbeispiel der Erfindung näher erläutert.

In der Fig. ist ein kompaktes Fahrzeug 1 gezeigt, das mit einer drahtlos steuerbaren Türschließanlage 2 ausgerüstet ist. Zur Steuerung dieser Türschließanlage sind in dem mit einem Sender ausgerüsteten Fahrzeugschlüssel 3 Fernsteuerungsfunktionen integriert, die erfindungsgemäß um die Funktionen "Parken", "Vor" und "Zurück" erweitert sind. Weiterhin ist das Fahrzeug 1 mit einer rechnerunterstützten Motorsteuerung 4 ausgerüstet, die erfindungsgemäß um eine auf sie einwirkende Park-Logik 5 erweitert ist. Die Motorsteuerung 4 steuert elektronisch die üblichen Stellglieder am Motor; unter anderem eine Drosselklappe 6 für die Kraftsoffzufuhr, eine Kupplung 7 und ein Getriebe 8 für die Gangeinstellung.

Abweichend von den vorangehend genannten Stellgliedern kann zur Anwendung der erfindungsgemäßen Lösung die Motorsteuerung auch auf ein Automatik-Getriebe mit vorgeschaltetem Drehmomentenwandler und anstelle der Drosselklappe auf andere, bekannte elektronische Stellglieder zur Kraftstoffeinspritzung einwirken.

Anstelle der Ergänzung einer vorhandenen Motorsteuerung 4 durch die Park-Logik 5 ist auch die Verwendung einer Motorsteuerung mit integrierter Park-Logik für die erfindungsgemäße Lösung verwendbar.

Die Fernsteuerung der Park-Logik 5 kann alternativ zu der voranstehend beschriebenen, erweiterten, drahtlosen Türschließanlage über ein drahtgebundenes Steuer-Panel erfolgen, das nach Abschluss des Parkvorganges mit der aufgewickelten Drahtverbindung in einem von außen zugänglichen, abgesicherten Behälter des Fahrzeuges verstaut ist.

Zum Ein- uns Ausparken empfängt die Park-Logik 5 die von dem Fahrzeugführer mit dem Fahrzeugschlüssel 3 drahtlos übermittelten Funktionen. Dazu ist die standardmäßige Türschließanlage 2 erfindungsgemäß um entsprechende Empfangs- und interne Ausgabemodule ergänzt.

Vor einer Aktivierung der Funktion "Parken", mit der das Ein-und Ausparken gestartet wird, muß der Fahrzeugführer sich von einer für das Parken geeignet angefahrenen Fahrzeugposition überzeugen. Weiterhin muß vor dem Verlassen des Fahrzeuges die Lenkung über das Lenkradschloss blockiert und die Festellbremse 9 geschlossen worden sein. Die letztgenannten Bedingungen werden von der Park-Logik 5 überwacht. Beim Verlassen des Fahrzeuges bewirkt die Entfernung des Fahrzeugschlüssels 3 aus dem Zündschloss das Abstellen des Motors. Der Motorstart und die Motorabschaltung über das Zündschloss kann alternativ wie in einem Lastkraftwagen über eine separate Start-/Stopp-Taste erfolgen, worauf dann die Parklogik bezüglich dieser Funktionen entsprechend abgestimmt sein muß.

Anstelle der manuell gesteuerten Lenkradblockierung über das Lenkradschloss kann alternativ auch eine von der Park-Logik 5 elektronisch gesteuerte Lenkungsverriegelung vorgesehen sein.

Die Aktivierung der Funktion "Parken" erfolgt manuell mittels einer Taste 11 an dem Fahrzeugschlüssel 3. Nach einem kurzzeitigen Betätigen dieser Taste 11 bleibt die Funktion aktiviert und es wird zunächst von der Park-Logik 5 kontrolliert, ob die Lenkung blockiert und die Feststellbremse 9 angezogen ist. Wenn diese Bedingungen erfüllt sind, veranlaßt die Park-Logik 5 die Motorsteuerung 4 zu einem automatischen Leerlaufstart des Motors. Andernfalls unterbleibt der Motorstart.

Nachdem der Motor gestartet ist, kann der Fahrzeugführer durch eine manuelle Aktivierung der Funktionen "Vor" oder "Zurück" das Fahrzeug nach Sicht ferngesteuert im Sinne des Richtungspfeiles 10 in Geradeausfahrt vor und zurück bewegen. Die Aktivierung dieser Funktionen erfolgt mittels Tasten 12 und 13. Die Funktionen "Vor" und "Zurück" bleiben nur so lange aktiviert, wie die entsprechende Tasten 12,13 gedrückt werden. Durch das letztgenannte Bedienungsmerkmal ist eine kontrollierte Fahrzeugsteuerung gesichert. Bei Störungen in der Steuerung, wenn z.B. das Fahrzeug vor statt zurück fährt oder wenn es z.B. zu schnell fährt kann das Fahrzeug mit dem Loslassen der gerade betätigten Taste 12,13 sofort gestoppt werden. Weiterhin wird damit auch ein Kontrollverlust vermieden, der durch ein mögliches Fallenlassen des Fahrzeugschlüssels oder ähnlich wirkende Vorgänge auftreten kann. Zusätzlich oder alternativ kann der Fahrzeugschlüssel mit einer Taste für einen Notstopp ausgerüstet sein, der auch bei einer generellen Störungen in der Park-Logik 5 wirkt.

Zur Anzeige von Fehlfunktionen, z.B. bei einer vor dem Motorstart unblockierten Lenkung oder Feststellbremse, kann der Fahrzeugschlüssel 3 oder das drahtgeundene Steuer-Panel mit bidirektional wirkenden Kommunikationsmitteln ausgerüstet sein. Beim Fahrzeugschlüssel 3 bedeutet dies, dass er neben dem Sender auch einen Empfänger enthält, der mit einem Sender der Türschließanlage 2 zusammenwirkt; beim drahtgebundenen Steuer-Panel sind dieses entsprechende Ein-und Ausgabeschnittstellen. Die Warnmeldung kann z.B. optisch durch ein gleichzeitiges Blinken aller Tasten 11,12,13 angezeigt werden.

Beim Aktivieren der Funktionen "Vor" und "zurück" wird die Motorsteuerung 4 von der Park-Logik 5 zum Einkuppeln eines Getriebeganges, zur begrenzten Öffnung der Drosselklappe 6 und zur Lösung der Feststellbremse 9 veranlaßt, wodurch das Fahrzeug je nach gedrückter Taste vorwärts oder rückwärts Fahrt aufnimmt. Das Stoppen des Fahrzeuges beim Loslassen der Tasten 12,13 erfolgt mit der Feststellbremse 9. Der Fahrzeugführer steuert über die, ggf. aufeinanderfolgende, Aktivierung der Funktionen "Vor" und "Zurück" und über deren Aktivierungsdauer die Bewegung des Fahrzeuges. Bei einem Erreichen der gewünschten, endgültigen Parkposition wird der Parkvorgang über eine nochmalige Aktivierung der Funktion "Parken" abgeschlossen, wobei von der Park-Logik 5 und der Motorsteuerung 4 der Motor gestoppt und die Feststellbremse 9 geschlossen wird.

Die Fahrgeschwindigkeit zum Einparken ist von der Park-Logik 5 begrenzt; z.B. auf maximal 0.5 m/s. Die Park-Logik wirkt dazu auf die Motorsteuerung 4 und auf die Feststellbremse 9 zur Einstellung einer begrenzten Bremswirkung ein.

Die Feststellbremse 9 ist mit einer sogenannten "Fail-Safe"-Funktion ausgerüstet, welche die Bremse automatisch schließt, wenn eine Störung, z.B. durch einen Stromausfall oder durch eine ungenügende Bereitstellung von Bremsenergie, an der Bremse auftritt.

Abweichend von dem vorangehend beschriebenen Ausführungsbeispiel können die Tasten 11,12,13 an dem Fahrzeugschlüssel 3 alternativ auch als Kipp-oder Wippschalter oder als ähnlich wirkendes Betätigungelement ausgebildet sein und auch eine optische Anzeige zur Signalisierung Ihrer Aktivierung aufweisen. Die Betätigungselemente zur Steuerung des Parkvorganges können am Fahrzeugschlüssel 3 mittels einer Klappe abgedeckt sein, die ein ungewolltes Aktivieren dieser Elemente vermeiden hilft.

Weiterhin kann die allgemeine Verkehrssicherheit beim erfindungsgemäßen Parken dadurch erhöht werden, dass während des Parkens die im Fahrzeug standardmäßig vorhandene Warnblink-Funktion von der Park-Logik 5 aktiviert wird.

## Patentansprüche

1. Ein-/Ausparkvorrichtung für Personenkraftfahrzeuge mit einer rechnerunterstützten Motorsteuerung, wobei die Motorsteuerung (4) um eine Park-Logik (5) erweitert ist, die ferngesteuert vom ausgestiegenen Fahrzeugführer so steuerbar ist, dass das vor einer Parklücke abgestellte Fahrzeug (1) bei blockierter Lenkung mit kontrollierter maximaler Fahrgeschwindigkeit in vorwärts oder rückwärts gerichteter Geradeausfahrt in die Parklücke manövrierbar ist, **dadurch gekennzeichnet, dass** die Fernsteuerung der Park-Logik (5) über den mit einem Sender ausgerüsteten Fahrzeugschlüssel (3) erfolgt, der mit einer im Fahrzeug (1) enthaltenen, drahtlos steuerbaren Türschließanlage (2) kommuniziert.

2. Ein-/Ausparkvorrichtung nach Patentanspruch 1, **dadurch gekennzeichnet, dass** die Türschließanlage (2) und der Fahrzeugschlüssel (3) jeweils mit einem Sender und einem Empfänger ausgerüstet sind, und dass von der Park-Logik (5) erkannte Fehlfunktionen zum Fahrzeugschlüssel (3) gesendet und dort optisch angezeigt werden.

3. Ein-/Ausparkvorrichtung nach Patentanspruch 1 oder 2, **dadurch gekennzeichnet, dass** der Fahrzeugschlüssel (3) Betätigungselemente zur Fernsteuerung der Geradeausfahrt aufweist, die beim Beenden oder Unterbrechen der manuellen Betätigung dieser Elemente ein Abstoppen des Fahrzeuges auslösen.

4. Ein-/Ausparkvorrichtung nach einem der vorangehenden Patentansprüche, **dadurch gekennzeichnet, dass** der Fahrzeugschlüssel (3) mit einem Notstopp-Betätigungselement ausgerüstet ist.

5. Ein-/Ausparkvorrichtung nach einem der vorangehenden Patentansprüche, **dadurch gekennzeichnet, dass** die Betätigungselemente für die Park-Funktionen bei Nichtbenutzung durch eine Klappe abgedeckt sind.

6. Ein-/Ausparkvorrichtung nach einem der vorherigen Ansprüche, **dadurch gekennzeichnet, dass** die Park-Logik 5 während des Parkvorganges selbsttätig die Warnblink-Funktion des Fahrzeuges aktiviert.

## Claims

1. A parking device for passenger motor vehicles having a computer-assisted engine control system, the engine control system (4) being extended by a parking logic unit (5) which can be controlled remotely by a vehicle driver who has left the car in such a manner that the vehicle which is parked in front of a parking space (1) can be manoeuvred forwards or backwards into the parking space in a straight line at a controlled maximum speed with the steering lock on,
**characterised in that**
the parking logic unit (5) is remotely controlled by the key (3) with is fitted with a transmitter and which communicates with a wirelessly controllable door closing system (2) in the vehicle (1).

2. A parking device in accordance with claim 1,
**characterised in that**
the door closing system (2) and the vehicle key (3) are each fitted with a transmitter and a receiver and that malfunctions identified by the parking logic unit (5) are sent to the vehicle key (5) where they are displayed optically.

3. A parking device in accordance with claim 1 or 2,
**characterised in that**
the vehicle key (3) has actuating elements for remotely controlling the vehicle in a straight line which trigger the vehicle to stop when the manual actuation of these elements is terminated or interrupted.

4. A parking device in accordance with one of the preceding claims,
**characterised in that**
vehicle key (3) is fitted with an emergency stop actuating element.

5. A parking device in accordance with one of the preceding claims,
**characterised in that**
the actuating elements for the parking functions are covered by a flap when they are not in use.

6. A parking device in accordance with one of the preceding claims,
**characterised in that**
the parking logic unit (5) automatically activates the vehicle's hazard warning light function during the parking process.

## Revendications

1. Dispositif pour faire entrer et sortir un véhicule automobile de tourisme d'une place de stationnement avec une commande de moteur assistée par ordinateur, moyennant quoi la commande du moteur (4) est complétée par une logique de parcage (5) qui, télécommandée par le conducteur descendu du véhicule, est commandable de sorte que le véhicule garé (1) devant une aire de stationnement avec la direction bloquée est manoeuvrable dans l'aire de stationnement à une vitesse de marche contrôlée maximale en sortie en ligne droite dirigée vers l'avant ou vers l'arrière, **caractérisé en ce que** la commande à distance de la logique de parcage (5) est effectuée par la clé du véhicule (3) équipée d'un émetteur, clé qui communique avec un dispositif de fermeture des portières (2) compris dans le véhicule et contrôlable sans fil.

2. Dispositif pour faire entrer et sortir un véhicule d'une place de stationnement selon la revendication 1, **caractérisé en ce que** le dispositif de fermeture des portières (2) et la clé du véhicule (3) sont respectivement équipés d'un émetteur et d'un récepteur, et **en ce que** les fonctions incorrectes reconnues par la logique de parcage (5) sont transmises à la clé du véhicule (3) où elles sont affichées de manière optique.

3. Dispositif pour faire entrer et sortir un véhicule d'une aire de stationnement selon la revendication 1 ou 2, **caractérisé en ce que** la clé du véhicule (3) comporte des éléments de commande pour télécommander la sortie en ligne droite, éléments qui provoquent un arrêt du véhicule lorsque leur actionnement manuel est achevé ou interrompu.

4. Dispositif pour faire entrer et sortir un véhicule d'une place de stationnement selon l'une des revendications précédentes, **caractérisé en ce que** la clé du véhicule (3) est équipée d'un élément de commande d'arrêt d'urgence.

5. Dispositif pour faire entrer et sortir un véhicule d'une place de stationnement selon l'une des revendications précédentes, **caractérisé en ce que** les éléments de commande pour les fonctions de parcage sont recouverts d'un clapet en cas de non-usage.

6. Dispositif pour faire entrer et sortir un véhicule d'une place de stationnement selon l'une des revendications antérieures, **caractérisé en ce que** la logique de parcage (5) active automatiquement la fonction du signal de détresse du véhicule pendant le processus de parcage.
